# EUROPÄISCHE PATENTANMELDUNG

(11) **EP 2 543 986 A2**
(43) Veröffentlichungstag der Anmeldung: **09.01.2013**
(21) Anmeldenummer: 12174971.7
(22) Anmeldetag: 04.07.2012
(51) Int. Cl.: G01N 5/04

(54) **Verfahren zur Messung der Schichtdicke von organischen Beschichtungen metallischer Grundwerkstoffe**

(30) Priorität: 08.07.2011 DE 102011051696
(71) Anmelder: Deutsche Edelstahlwerke GmbH, 58452 Witten (DE)
(72) Erfinder: Bange, Sebastian, 44627 Herne (DE); Kozariszczuk, Matthias, 40629 Düsseldorf (DE)
(74) Vertreter: Cohausz & Florack

(57) **Zusammenfassung**

Die vorliegende Erfindung betrifft ein Verfahren zur Bestimmung eines Maßes, das für die Dicke einer auf einem metallischen Grundwerkstoff aufgebrachten anorganischen Beschichtung kennzeichnend ist, wobei gemäß dem Verfahren eine erste Messung an einer aus dem mit der Beschichtung versehenen Grundwerkstoff bestehenden Probe (P) vorgenommen wird, anschließend die Beschichtung chemisch von der Probe (P) entfernt wird, daraufhin ein zweite Messung an der Probe (P) vorgenommen wird und schließlich aus der Differenz des Ergebnisses der vor und nach der Entfernung der Beschichtung vorgenommenen Messungen das die Dicke der Beschichtung kennzeichnende Maß ermittelt wird. Das erfindungsgemäße Verfahren ist kostengünstig und ermöglicht es auf einfache und wirtschaftlich effektive Weise, die Messung der Schichtdicke von anorganischen Beschichtungen metallischer Grundwerkstoffe innerhalb kurzer Zeit zu ermitteln. Dies wird dadurch erreicht, dass die Beschichtung in einem Säurebad (L) aufgelöst wird, welches den Grundwerkstoff nicht angreift, und dass das chemische Auflösen der Beschichtung im Säurebad (L) durch eine Ultraschallbehandlung beschleunigt wird.

## Beschreibung

Die Erfindung betrifft ein Verfahren zur Bestimmung eines Maßes, das für die Dicke einer auf einem metallischen Grundwerkstoff aufgebrachten anorganischen Beschichtung kennzeichnend ist, wobei gemäß dem Verfahren eine erste Messung an einer aus dem mit der Beschichtung versehenen Grundwerkstoff bestehenden Probe vorgenommen wird, anschließend die Beschichtung chemisch von der Probe entfernt wird, daraufhin eine zweite Messung an der Probe vorgenommen wird und schließlich aus der Differenz des Ergebnisses der vor und nach der Entfernung der Beschichtung vorgenommenen Messungen das die Dicke der Beschichtung kennzeichnende Maß ermittelt wird.

Anorganische Beschichtungen in Form von dünnen funktionellen Schichten finden in der Technik und der Wissenschaft vielfältige Anwendung. Dabei kann die anorganische Beschichtung zum Bespiel als Haftgrundlage, zum Schutz vor Korrosion oder Verschleiß, zur Verbesserung der Gleiteigenschaften oder zur Beeinflussung der Härte, des elektrischen Widerstandes oder anderer Oberflächenmerkmale dienen.

In vielen der sich in der Praxis ergebenden Anwendungsfälle ist die Kenntnis der mittleren Dicke oder des als Gewicht pro Flächeneinheit angegebenen Belegungsgewichtes - auch "Auflagenstärke" genannt - der Beschichtung von zentraler Bedeutung. Diese beiden Maße sind jeweils kennzeichnend für die Schichtdicke der auf dem metallischen Grundwerkstoff vorhandenen Beschichtung. Aus der an einer Probe des jeweiligen Grundwerkstoffs gemessenen Dicke kann unmittelbar auf die Dickenverteilung der auf dem Produkt vorhandenen Beschichtung geschlossen werden, von dem die Probe entnommen worden ist. Genauso kann aus dem erfassten Belegungsgewicht der Probe unter Berücksichtigung der Dichte der Beschichtung und der mit der Beschichtung belegten Fläche der Probe auf die Dicke der Beschichtung geschlossen werden.

Eine exakt eingestellte und reproduzierbare Schichtdicke ist ein wichtiges Qualitätsmerkmal vieler Beschichtungsprozesse und damit einhergehend der nach diesen Prozessen beschichteten Produkte. Ein Beispiel für ein solches Produkt ist ein aus Stahl gefertigter phosphatierter Walzdraht, der dem beim Endverarbeiter zu Bauteilen, wie Schrauben, Nägel, Ventile, Seile oder Federn, umgeformt wird. Der nach der Warmformgebung auf dem Walzdraht haftende Zunder wird üblicherweise in einer Beizeinrichtung entfernt, in der in der Regel mit Salzsäure die Walzdrahtoberfläche chemisch aktiviert und der Zunder abgetragen wird. Anschließend wird der Walzdraht für eine spätere Kaltumformung mit einer Phosphatierungsschicht belegt.

Beim Phosphatieren handelt es sich um eine chemische Oberflächenbehandlung von metallischen Werkstoffen, welche mit sauren, phosphathaltigen Behandlungslösungen inkubiert werden. Dabei schlägt sich eine phosphathaltige Schicht auf dem metallischen Werkstoff nieder. Das Phosphat-Anion wird dabei immer aus der Behandlungslösung, das Kation entweder aus der Lösung oder vom metallischen Werkstoff geliefert. Während des Phosphatierens herrscht üblicherweise ein saurer pH-Wert zwischen 2 und 4. Der eigentliche Verfahrensablauf beim Phosphatieren besteht aus einer Beizreaktion und dem Abscheiden einer Phosphatschicht auf der abgebeizten Werkstoffoberfläche.

Die Schichtdicke der Phosphatierung muss in der Regel genauen Vorgaben entsprechen. Durch ihre feste Verwachsung mit der Metalloberfläche und ihrer großen Härte bleibt die Phosphatierung auch bei einer mehrstufig und mit starker Umformung durchgeführten Kaltverformung bestehen. Sie bietet so einen Schutz vor Kaltverschweißungen des Werkstücks mit dem Werkzeug. Darüber hinaus wirkt die Phosphatierung als Schmiermittelträger und gewährleistet Notlaufeigenschaften, so dass durch die Beschichtung insgesamt der Werkzeugverschleiß bei der Formgebung des Walzdrahts vermindert ist. Weicht die aufgetragene Schichtdicke aber von den jeweiligen Vorgaben ab, so können diese Vorteile der Phosphatbeschichtung nicht mit der geforderten Sicherheit genutzt werden.

Aus dem Stand der Technik sind unterschiedliche Verfahren zur Bestimmung der Schichtdicke oder des Belegungsgewichts, also der Schichtmasse pro Flächeneinheit, bekannt.

Die Dicke unmagnetischer Beschichtungen auf ferromagnetischen Grundstoffen wie Eisen oder Stahl können beispielsweise durch auf Elektromagnetismus beruhende Wirbelstrom- und Magnetverfahren bestimmt werden. Diese Verfahren sind in der DIN EN ISO 2187:1995 und der DIN EN ISO 2360:2003 beschrieben.

Des Weiteren sind radiometrische sowie optische Verfahren zur Schichtdickenmessung bekannt, die eine unmittelbare Erfassung der Dicke einer auf einer Probe vorhandenen Beschichtung erlauben.

Die DIN EN ISO 2177:2004 beschreibt darüber hinaus ein coulometrisches Verfahren, bei dem Beschichtungen elektrolytisch abgelöst werden und die Schichtdicke gravimetrisch bestimmt wird.

In der DIN EN ISO 3892 ist ein ebenfalls gravimetrisches Verfahren zur Messung des Schichtgewichts von Konversionsschichten auf metallischen Werkstoffen geregelt, bei dem die Beschichtung chemisch aufgelöst wird. Gemäß dieser Norm werden Eisensphosphat- und Manganphosphatschichten auf Eisen- oder Stahlwerkstoffen durch fünfzehnminütige Inkubation in einer 5 Gew.-% Chrom(VI)-Oxid enthaltenden wässrigen Lösung bei 75 °C abgelöst. In vergleichbarer Weise werden nach der Norm Zinkphosphatschichten auf Eisen- oder Stahlwerkstoffen durch Reaktion mit einer stark alkalischen Lösung (10 Gew.-% NaOH, 9 Gew.-% EDTA Tetranatriumsalz, 0,4 Gew.-% Triethanolamin) für 5 Minuten bei 70 °C abgelöst. Phosphatschichten auf Zink- und Cadmiumwerkstoffen lassen sich gemäß der Norm mit Ammoniumdichromat, Chromatschichten auf Zink- und Cadmiumwerkstoffen mit Cyanid (NaCN) und Natronlauge (NaOH) unter Elektrolysebedingungen ablösen.

All diesen aus dem Stand der Technik bekannten Messverfahren zur Bestimmung von Schichtdicken ist gemein, dass sie entweder aufwändige, teure und technisch anspruchsvolle Messgeräte benötigen, wie es beispielsweise bei den elektromagnetischen, radiometrischen und optischen Verfahren der Fall ist, oder, wie bei dem voranstehend erläuterten gravimetrischen Verfahren gemäß DIN EN ISO 3892, harsche Reaktionsbedingungen sowie die Verwendung gefährlicher bis hochgiftiger Chemikalien voraussetzen. So stellen insbesondere das Erhitzen von starken Laugen und Säuren auf über 70 °C sowie die Verwendung von als krebserregend eingestuften Verbindungen, wie Ammoniumdichromat und Chrom(VI)-Oxid, und der Einsatz von hoch-giftigem Natriumcyanid hohe Anforderungen an die Arbeitssicherheit.

Ein weiterer für die praktische Verwendung wesentlicher Nachteil der voranstehend erläuterten, aus dem Stand der Technik bekannten Verfahren ist der hohe Zeitaufwand, der mit jeder einzelnen Messung verbunden ist. So summiert sich beispielsweise der Zeitaufwand bei einer gemäß DIN EN ISO 3892 durchgeführten Messung der Schichtdicke einer Zinkphosphatschicht auf einem Eisen- oder Stahlwerkstoff selbst dann auf über 20 Minuten, wenn das Ablösemedium erhitzt wird. Bei einer Eisenphosphatbeschichtung betragen die Analysezeiten über 30 Minuten. Zu diesen Zeiten kommt noch der Zeitbedarf, der für die Probenentnahme, den Transport der Probe und die Ergebnisübermittlung benötigt wird. Derart lange Zeiten zwischen der Probenentnahme und der Übermittlung des Ergebnisses der Analyse sind mit einem im kontinuierlichen Durchlauf ablaufenden Produktionsbetrieb nicht vereinbar, da entweder der Betrieb entsprechend lange unterbrochen werden muss oder, wenn die Analyse eine fehlerhafte Beschichtung ergibt, die Gefahr besteht, dass während der Analysedauer laufend Ausschuss produziert wird. Dies gilt selbst dann, wenn, wie in der Praxis üblich, für das Ablösen der Phosphatschicht im betrieblichen Einsatz Salzsäurebäder mit einer Einsatzkonzentration von 15 % bis 20 % verwendet werden.

Ausgehend von dem voranstehend erläuterten Stand der Technik bestand die Aufgabe der Erfindung darin, ein kostengünstiges Verfahren zu nennen, mit dem es auf einfache und wirtschaftlich effektive Weise möglich ist, die Messung der Schichtdicke von anorganischen Beschichtungen metallischer Grundwerkstoffe innerhalb kurzer Zeit zu ermitteln.

Diese Aufgabe ist erfindungsgemäß durch das in Anspruch 1 angegebene Verfahren gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Beim erfindungsgemäßen Verfahren zur Bestimmung eines Maßes, das für die Dicke einer auf einem metallischen Grundwerkstoff aufgebrachten anorganischen Beschichtung kennzeichnend ist, wird in Übereinstimmung mit dem voranstehend erläuterten, beispielsweise in der DIN EN ISO 3892 geregelten Vorgehensweise zunächst eine erste Messung an einer aus dem mit der Beschichtung versehenen Grundwerkstoff bestehenden Probe vorgenommen. Anschließend wird die Beschichtung chemisch von der Probe entfernt. Daraufhin wird dann an der so entschichteten Probe eine zweite Messung vorgenommen. Schließlich wird aus der Differenz des Ergebnisses der vor und nach der Entfernung der Beschichtung an der Probe vorgenommenen Messungen das die Dicke der Beschichtung kennzeichnende Maß ermittelt.

Erfindungsgemäß wird nun die Beschichtung in einem Säurebad aufgelöst, welches den Grundwerkstoff nicht angreift. Gleichzeitig wird erfindungsgemäß das chemische Auflösen der Beschichtung im Säurebad durch eine Ultraschallbehandlung beschleunigt. Überraschend hat sich dabei gezeigt, dass in Folge der erfindungsgemäß vorgesehenen Ultraschallbehandlung bei erfindungsgemäßer Vorgehensweise schon mit geringen Säurekonzentrationen, die deutlich unterhalb der im Stand der Technik üblichen Säurekonzentrationen liegen, sehr gute Ablöseergebnisse erzielt werden. Mit dem erfindungsgemäßen Verfahren ist es so möglich, die Phosphatschicht in einer für den Betrieb ausreichend kurzen Zeit von dem Grundmaterial zu lösen. Entscheidend für die Genauigkeit der erfindungsgemäß ermittelten, die Schichtdicke kennzeichnenden Größe ist dabei, dass es die erfindungsgemäße Vorgehensweise ermöglicht, eine so schwache Säurekonzentration anzuwenden, dass das Grundmaterial des Stahlprodukts sicher nicht angegriffen wird. Mit der Erfindung kann somit im laufenden Schichtbetrieb eine zeitnahe Analyse der Phosphatschicht so durchgeführt werden, so dass auch strengsten Anforderungen an die Qualitätssicherung genügt wird. Ein weiterer Vorteil des erfindungsgemäßen Verfahrens besteht dabei darin, dass garantiert werden kann, dass nach der erfindungsgemäß durchgeführten Entfernung der Phosphatschicht keine Restschicht mehr auf den behandelten Proben vorhanden ist, die das Messergebnis verfälschen würde. Darüber hinaus besteht ein wesentlicher Vorteil der erfindungsgemäßen Vorgehensweise darin, dass die Ergebnisse des erfindungsgemäßen Verfahrens reproduzierbarer sind als die Ergebnisse der in bekannter Weise durchgeführten Schichtdickenmessungen.

Konkret kann das erfindungsgemäße Verfahren zur Messung der Schichtdicke von anorganischen Beschichtungen metallischer Grundwerkstoffe die folgenden in einem aufeinanderfolgenden Ablauf absolvierten Arbeitsschritte umfassen:
a) Bestimmung des Gewichts oder eines von der Dicke der Beschichtung abhängigen Bezugsmaßes einer entnommenen, die Beschichtung umfassenden Probe, wobei es sich bei dem betreffenden Bezugsmaß um die Gesamtdicke der Probe an mindestens einer Stelle der Probe handeln kann.
b) Chemisches Auflösen der Beschichtung durch Einbringung der Probe in ein Säurebad, welches den Grundwerkstoff nicht angreift, wobei das chemische Auflösen der Beschichtung im Säurebad durch eine Ultraschallbehandlung beschleunigt wird.
c) Erneute Bestimmung des Gewichts oder des von der Dicke der Beschichtung abhängigen Bezugsmaßes der Probe.
d) Anschließende Berechnung der Schichtdicke aus der Differenz des Gewichts oder des von der Dicke der Beschichtung abhängigen Bezugsmaßes der Probe vor und nach Auflösen der Beschichtung im Säurebad.

Erfindungsgemäß wird also die anorganische Beschichtung selektiv in einem Säurebad mit Hilfe von Ultraschall in Lösung gebracht und aus der Differenz des Gewichts oder eines von der Dicke der Beschichtung abhängigen Bezugsmaßes der Probe vor und nach der im Säurebad erfolgenden Auflösen der Beschichtung die Schichtdicke ermittelt.

Im Fall, dass bei den vor und nach dem Entschichten durchgeführten Messungen jeweils das Gewicht der Probe erfasst wird und aus der Gewichtsdifferenz das Belegungsgewicht pro Flächeneinheit bestimmt wird, kann aus dem Belegungsgewicht pro Flächeneinheit die mittlere Schichtdicke ermittelt werden, wenn die Dichte der Beschichtung und die jeweils mit der Beschichtung belegte Fläche bekannt sind.

Eine bevorzugte Anwendung des erfindungsgemäßen Verfahrens ist die Messung der Schichtdicke von Konversionsschichten auf metallischen Grundwerkstoffen. Konversionsschichten sind sehr dünne, anorganische und nichtmetallische Beschichtungen metallischer Werkstoffe, welche sich in der Regel durch eine chemische Reaktion des metallischen Untergrunds mit einer wässrigen Behandlungslösung bilden. Technische Bedeutung zur Herstellung solcher Konversionsschichten haben insbesondere das Phosphatieren, das Chromatieren, das Eloxieren, das Brünieren und Metallfärbetechniken erlangt. Die entsprechenden Konversionsschichten sind dabei als Phosphatierungen, Chromatierungen, Eloxierungen, Brünierungen und Färbungen bekannt. Konversionsschichten können unterschiedliche Funktionen erfüllen. So stellt zum Beispiel eine Phosphatierung einen ausgezeichneten Haftgrund für nachfolgende Beschichtungen dar, bietet einen guten Korrosions- und Verschleißschutz, elektrische Isolation, Verminderung des Gleitwiderstandes sowie verbesserte Kaltverformung.

Besonders geeignet ist das erfindungsgemäße Verfahren zur Ermittlung der Schichtdicke von Phosphatierungen. Phosphatschichten, welche mit Zink-Phosphatierungschemikalien auf Eisen oder Stahl erzeugt werden, enthalten vor allem Hopeit und Posphophyllit, solche, die mit Calciumphosphatbädern erzeugt werden, außerdem Scholzit, und mit Manganphosphat-Lösungen erzeugte enthalten (Mn,Fe)₅H₂(PO₄)₄·4H₂O (Huréaulith).

Neben Manganphosphatschichten dient das erfindungsgemäße Verfahren insbesondere der Schichtdickenmessung von Zinkphosphat- oder Eisenphosphatschichten.

Erfindungsgemäß wird die auf der jeweiligen Probe vorhandene anorganische Beschichtung mittels eines Säurebads selektiv entfernt, das die Beschichtung angreift, nicht aber den sie tragenden Grundwerkstoff. Das Säurebad enthält somit erfindungsgemäß eine ausreichend starke Säure. Hierzu geeignete Säuren weisen in der Praxis einen bei Raumtemperatur gemessenen pKₛ-Wert von weniger als 4 auf. Der pKₛ-Wert einer Säure ("Säureexponent") ist gemäß dem Römpp-Kompaktlexikon Basislexikon Chemie, 1999, S. 1944, als der negative dekadische Logarithmus der Säurekonstante definiert. Säuren mit einem pKₛ-Wert unter 4 sind beispielsweise: HClO₄, HI, HCl, H₂SO₄, H₃O⁺, HNO₃, HSO₄, H₃PO₄, [Fe(H₂O)₆]³⁺, HF, HNO₂, HCOOH.

Praktische Versuche haben gezeigt, dass optimale Ergebnisse erzielt werden, wenn das Säurebad Salzsäure (HCl) enthält. Sinnvolle Konzentrationsbereiche für die im Säurebad verwendete Salzsäure sind Konzentrationen von 0,05 bis 5 Gew.-%. Für viele Anwendungen, insbesondere bei der Bestimmung der Auflagenstärke einer Phosphatbeschichtung, ist eine Salzsäure Konzentration von 0,4 - 0,6 Gew.-%, insbesondere 0,5 Gew.-%, besonders praxisgerecht.

Auch dann, wenn andere Säuren zur Ablösung der Beschichtung im Säurebad eingesetzt werden, ist der pH-Wert des Säurebades optimaler Weise auf einen Wert zwischen 0 und 2 einzustellen.

Die im Hinblick auf die Geschwindigkeit der Auflösung der Beschichtung bereits günstige Wirkung einer geeigneten Säure wird erfindungsgemäß durch eine Ultraschallbehandlung weiter beschleunigt. Durch diese Behandlung wird der Austausch zwischen Säurebad und Beschichtung intensiviert und dementsprechend die auf der Probe haftende Beschichtung schneller abgelöst. Praktische Versuche haben gezeigt, dass sich dabei optimale Ergebnisse dann einstellen, wenn die Ultraschallfrequenz zwischen 20 - 50 kHz beträgt. Als besonders praktikabel hat sich insbesondere eine Ultraschallfrequenz von 30 - 40 kHz, insbesondere 35 kHz, erwiesen.

In der Praxis kann das mit der Ultraschallbehandlung kombinierte Auflösen der Beschichtung im Säurebad in einer konventionellen Ultraschallbad-Apparatur vorgenommen werden, welche mit vollentsaltzem Wasser befüllt ist und in das ein das Säurebad enthaltendes Reaktionsgefäß eingelassen wurde. Solch ein Reaktionsgefäß kann beispielsweise ein handelsübliches chemikaliengeeignetes Becherglas sein. Dabei sollte die Füllhöhe des Ultraschallbades mit der des Säurebades möglichst übereinstimmen.

Zusätzlich zu der Ultraschallbehandlung kann das Säurebad erwärmt werden. Diese Maßnahme führt zu einer weiteren Reaktionsbeschleunigung. Hierfür geeignete Temperaturen liegen in der Praxis im Bereich von 20 - 50 °C.

Die für das Entfernen der Beschichtung jeweils optimale Reaktionszeit kann für die jeweils zu untersuchende Beschichtung oder das jeweils zu untersuchende Produkt einmal in einer Versuchsreihe ermittelt werden. Ziel dieser Versuchsreihe ist dabei die Ermittlung des Zeitpunkts, ab dem die Beschichtung vollständig aufgelöst ist bzw. kein weiterer Materialabtrag mehr festgestellt werden kann. Die bis zu diesem Zeitpunkt vergehende Zeit kann dann erforderlichenfalls unter Addierung einer Toleranzzugabe als die optimale Behandlungsdauer angesehen werden, die bei allen weiteren Untersuchungen angewendet wird.

Messungenauigkeiten können dadurch vermieden werden, dass die jeweils in erfindungsgemäßer Weise entschichtete Probe nach Entnahme aus dem Säurebad und vor der zweiten Messung, also beispielsweise vor der Bestimmung ihres Gewichts oder des von der Dicke der Beschichtung abhängigen Bezugsmaßes, mit einem neutralem Spülmittel gewaschen und getrocknet wird. In der Praxis hat sich hier vollentsalztes Wasser als Spülmittel bewährt. Das Trocknen der Probe kann durch Ethanolbehandlung oder Verwendung eines anderen geeigneten Trocknungsmittels beschleunigt werden.

Die Bestimmung des Gewichts der Probe vor und nach Auflösen der Beschichtung im Säurebad kann in herkömmlicher Weise gravimetrisch durch Wiegen erfolgen.

Besonders geeignet ist das erfindungsgemäße Verfahren zur Bestimmung der Schichtdicke oder des Belegungsgewichts von Lang- oder Flachprodukten, deren Grundwerkstoffe aus einem Eisen-, Cadmium-, Magnesium-, Zink- oder Aluminium-Werkstoff bestehen. In der Praxis von besonderer Bedeutung ist dabei die Ermittlung der Dicke oder des Belegungsgewichts von anorganischen Schichten, die auf einem Stahlprodukt aufgetragen sind. Bei diesem Stahlprodukt kann es sich beispielsweise um ein Langprodukt, wie einem beschichteten Walzdrahterzeugnis, handeln.

Mit der Erfindung ist es somit wesentlich schneller, kostengünstiger und einfacher möglich, ein Maß zu bestimmen, das für die Dicke einer auf einem metallischen Grundwerkstoff aufgebrachten anorganischen Beschichtung kennzeichnend ist. Die für die Durchführung des erfindungsgemäßen Verfahrens benötigten Analysezeiten sind dabei so kurz, dass sich mit ihnen eine automatische und zügige Bestimmung von Schichtdicken anorganischer Beschichtungen metallischer Werkstoffe im laufenden Prozess bewerkstelligen lassen.

Aufgrund der Intensität, mit der die Beschichtung bei erfindungsgemäßer Vorgehensweise von der jeweiligen Probe entfernt wird, kann es dazu kommen, dass von der jeweiligen Probe mehr Beschichtungsmaterial abgetragen wird, als dies bei den genormten, auf anderen Entschichtungsmitteln basierenden Verfahren der Fall ist. Um hier Abweichungen der Ergebnisse des erfindungsgemäßen Verfahrens von den konventionellen Standardverfahren, wie beispielsweise den DIN EN ISO 3892 Meßmethoden, zu minimieren, kann bei der Ermittlung des die Dicke der Beschichtung kennzeichnenden Maßes ein Korrekturfaktor berücksichtigt werden, der von der Differenz des Ergebnisses der vor und nach der Entfernung der Beschichtung vorgenommenen Messungen abgezogen wird. Dieser Korrekturfaktor kann beispielsweise bezogen auf die jeweils zu entfernende Beschichtung anhand von Vergleichsversuchsreihen empirisch ermittelt werden, bei denen das erfindungsgemäß ermittelte, die Dicke der Beschichtung kennzeichnende Maß mit dem korrespondierenden Maß verglichen wird, das bei der Durchführung eines genormten Standardverfahrens ermittelt wird. In der Regel reicht hier eine einmalige Durchführung der Vergleichsversuche aus, um einen stabil reproduzierbaren Korrekturfaktor zu ermitteln.

Nachfolgend wird die Erfindung anhand von Ausführungsbeispielen näher erläutert. Es zeigen:

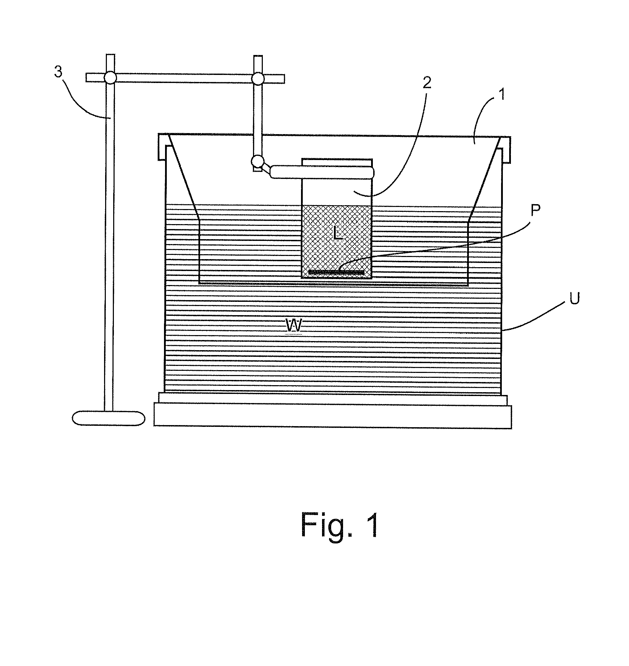

- Fig. 1: eine schematische Darstellung einer für die Durchführung des erfindungsgemäßen Verfahren eingesetzten Apparatur;
- Fig. 2: der bei der gemäß dem nachfolgend erläuterten Beispiel 2 durchgeführten Versuchsreihe erzielte Abtrag A in g/m² logarithmisch aufgetragen über die jeweilige Entschichtungsdauer t in Sekunden;
- Fig. 3: der bei der gemäß dem nachfolgend erläuterten Beispiel 3 durchgeführten Versuchsreihe erzielte Abtrag A in g/m² aufgetragen über die jeweilige Entschichtungsdauer t in Sekunden;
- Fig. 4: die bei den gemäß dem nachfolgend erläuterten Beispiel 4 durchgeführten Versuchsreihe ermittelten Belegungsgewichte Sd in g/m².

### Beispiel 1

In einem Laborversuch ist das Belegungsgewicht der Zink-Phosphatierung von einem aus dem Edelbaustahl 1.3505 (100Cr6) gewonnenen Walzdraht bestimmt worden. Dazu ist aus dem Walzdraht eine mit der Zink-Phosphatierungsbeschichtung versehene Probe P entnommen, vermessen und mit Ethanol gereinigt worden. Das Gewicht der Probe P ist anschließend gravimetrisch durch Wiegen bestimmt worden.

Im Anschluss ist die Probe P wie folgt entschichtet worden:
In dem Tragekorb 1 eines konventionellen Ultraschallbades U (Typ: BANDELIN SONOREX DIGITAL DK 512 P) ist ein Einsatzgefäß 2 mit einem Stativ 3 fixiert worden. Das Einsatzgefäß 2 war hier ein Becherglas mit einem Fassungsvolumen von 600 ml in niedriger Bauform nach DIN 12331 ISO 3819. Die Ultraschallfrequenz ist auf 35 kHz eingestellt worden. Das Ultraschallbad U ist mit vollentsalztem Wasser W und das Einsatzgefäß 2 mit einem aus einer 0,5 %-igen HCl-Lösung bestehenden Säurebad L befüllt worden. Das Füllniveau des Bades U und des Einsatzgefäßes 2 waren dabei im Wesentlichen identisch, so dass der Wasserspiegel und der Spiegel des Säurebads L auf annähernd einer Höhe lagen.

Die phosphatierte Probe P ist bei aktiviertem Ultraschall für 30 Sekunden in das Einsatzgefäß 2 getaucht worden. Das gesamte Verfahren wurde bei Raumtemperatur (20 °C) ohne Erwärmung des Säurebads L durchgeführt.

Nach der Entschichtungsdauer von 30 Sekunden war die Probe P vollständig entphosphatiert. Sie ist daraufhin aus Einsatzgefäß 2 entnommen, zur Neutralisation mit vollentsalztem Wasser gespült, mit Ethanol gereinigt und getrocknet worden. Anschließend wurde die Probe P erneut verwogen.

Aus der Gewichtsdifferenz der vor und nach dem Entschichten durchgeführten Gewichtsmessungen ergab sich bezogen auf die bekannte Oberfläche der Probe P das Belegungsgewicht in g/m². Vom so ermittelten Belegungsgewicht ist ein Korrekturwert von 1 g/m² abgezogen worden, der beispielsweise wie im Beispiel 4 erläutert ermittelt worden ist.

Bei einer größeren Zahl von Analysedurchläufen dieser Art wurde für das gesamte Verfahren einschließlich der Messungen, der Entschichtung und der nach der Entschichtung bis zur zweiten Messung durchgeführten Arbeitsschritte jeweils deutlich weniger als 5 Minuten benötigt. So ließen sich exakte und reproduzierbare Belegungsgewichtsbestimmungen in der Regel innerhalb von 1 bis 2 Minuten durchführen.

### Beispiel 2

Um die minimal benötigte Entschichtungszeit im erfindungsgemäßen Ultraschall-Säurebad zu bestimmen, wurde eine Versuchsreihe mit mehreren gleichförmigen Proben P von phosphatiertem Walzdraht durchgeführt. Es handelte sich bei der Phosphatierung wie in Beispiel 1 um eine Zinkphosphatierung. Der Walzdraht bestand ebenfalls aus dem Edelbaustahl mit der Werkstoffnummer 1.3505 (100Cr6).

Die Proben P wurden vermessen und verwogen und für unterschiedliche Zeitintervalle bei aktiviertem Ultraschallbetrieb bei einer Ultraschallfrequenz von 38 kHz in den mit einer 0,5 %-igen HCl-Lösung L befüllten Einsatzbecher 2 gelegt.

Der im Ultraschallbad U jeweils erzielte Materialabtrag wurde für jedes Zeitintervall durch erneutes Wiegen bestimmt und zur Angabe als Materialabtrag pro Flächeneinheit in g/m² umgerechnet.

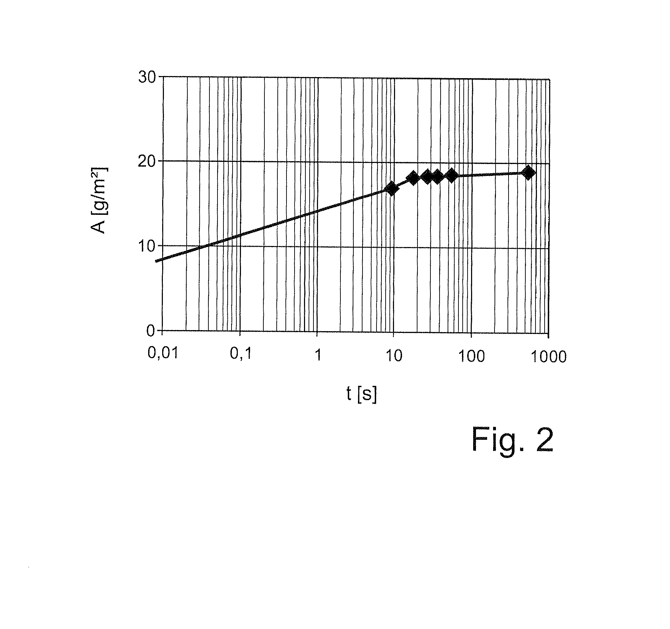

Die Ergebnisse dieser Versuchsreihe sind in Figur 2 dargestellt. Nach 30 Sekunden war die Beschichtung regelmäßig vollständig aufgelöst und es konnte kein weiterer Materialabtrag pro Zeiteinheit bei einer längeren Verweildauer im Säurebad L festgestellt werden. Die Entphosphatierungsreaktion im Säurebad L war unter Einwirkung der Ultraschallbehandlung also schon nach 30 Sekunden abgeschlossen. Bei längeren Inkubationszeiten blieb das Gewicht der Proben P annähernd konstant. Dies ist ein eindeutiges Indiz dafür, dass die Ultraschallunterstütze Säurebehandlung den Grundwerkstoff nicht angreift.

### Beispiel 3

Zur Absicherung der Erkenntnisse über den säurevermittelten Materialabtrag am Grundwerkstoff wurde zusätzlich noch eine Versuchsreihe mit wiederum aus Edelbaustahl 1.3505 (100Cr6) bestehendem, jedoch unbeschichteten Walzdraht durchgeführt.

Dazu wurden Proben des Walzdrahtes vermessen und verwogen und für unterschiedliche Zeitintervalle bei aktiviertem Ultraschallbetrieb bei einer Ultraschallfrequenz von 38 kHz in den mit einer 0,5 %-igen HCl-Lösung L befüllten Einsatzbecher 2 eingelegt. Der Materialabtrag wurde dann für jedes Zeitintervall durch erneutes Wiegen bestimmt und der Materialabtrag in g/m² umgerechnet.

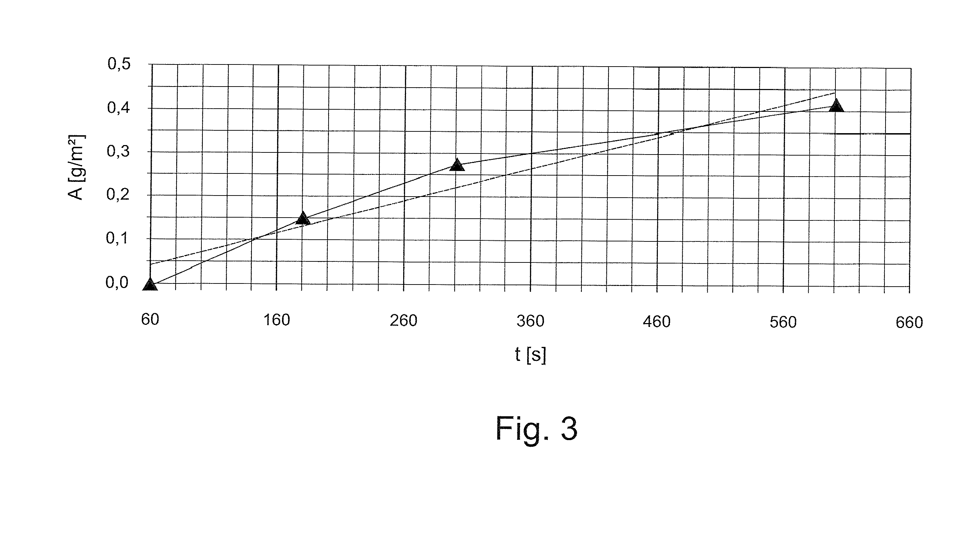

Die Ergebnisse dieser Versuchsreihe sind in Figur 3 dargestellt. Während der ersten 60 Sekunden ist überhaupt kein Materialabtrag am Grundwerkstoff messbar. Jedoch auch zu späteren Zeitpunkten betrug der Materialabtrag nur ca. 0,0007 g/m²s und ist damit vernachlässigbar.

Die auf einem aus einer 0,5 %-igen HCl-Lösung bestehenden Säurebad basierende, erfindungsgemäße Ultraschallunterstütze Säurebehandlung vermag demnach nur die Phosphatschicht abzulösen und greift den darunterliegenden Grundwerkstoff kaum an.

### Beispiel 4

Um das erfindungsgemäße Verfahren mit dem aus dem Stand der Technik bekannten Verfahren zur Bestimmung des Belegungsgewichts von Konversionsschichten nach DIN EN ISO 3892 zu vergleichen, wurde eine weitere Versuchsreihe durchgeführt.

Dabei wurde das Belegungsgewicht der Zink-Phosphatierung von Walzdraht aus Edelbaustahl 1.3505 (100Cr6) bestimmt. Die Proben wurden in 2 Gruppen aufgeteilt.

Das Belegungsgewicht der Probengruppe 1 wurde, wie zum Ausführungsbeispiel 1 beschrieben, nach dem erfindungsgemäßen Verfahren gemessen. Dabei wurden die verwogenen und vermessenen Proben P für jeweils 30 Sekunden bei aktiviertem Ultraschallbetrieb in den fixierten Einsatzbecher 2 eingelegt. Wie in den obigen Beispielen, enthielt der Einsatzbecher 2 als Säurebad eine 0,5 %-ige HCl-Lösung. Die Ultraschallfrequenz betrug 35 kHz.

Nach 30 Sekunden wurden die entphosphatierten Proben P entnommen, gespült, getrocknet und erneut verwogen. Das gesamte erfindungsgemäße Messverfahren dauerte unter 5 Minuten pro Probe P.

Das Belegungsgewicht der Probengruppe 2 wurde nach den Vorschriften der DIN EN ISO 3892 gemessen. Dazu wurde ein stark alkalisches Ablösemittel hergestellt (10 Gew.-% NaOH, 9 Gew.-% EDTA Tetranatriumsalz, 0,4 Gew.-% Triethanolamin) und unter dem Abzug in einem Becherglas auf 70 °C erhitzt. Zur Entphosphatierung wurden die zuvor verwogenen und vermessenen Proben für 5 Minuten in das Ablösemittel eingelegt, welches auf konstant 70 °C gehalten wurde. Dabei wurde für jede Probe gemäß DIN EN ISO 3892 frisches Ablösemittel verwendet. Anschließend wurden die entphosphatierten Proben gespült, getrocknet und erneut verwogen. Das gesamte Messverfahren nach DIN EN ISO 3892 beanspruchte inklusive des Erhitzens des Ablösemittels 20 Minuten pro Probe.

Bei beiden Probengruppen wurde anschließend die Gewichtsdifferenz vor und nach Entphosphatierung auf die bekannte Oberfläche der Probe bezogen und das Belegungsgewicht, ausgedrückt in Schichtgewicht in g/m², berechnet.

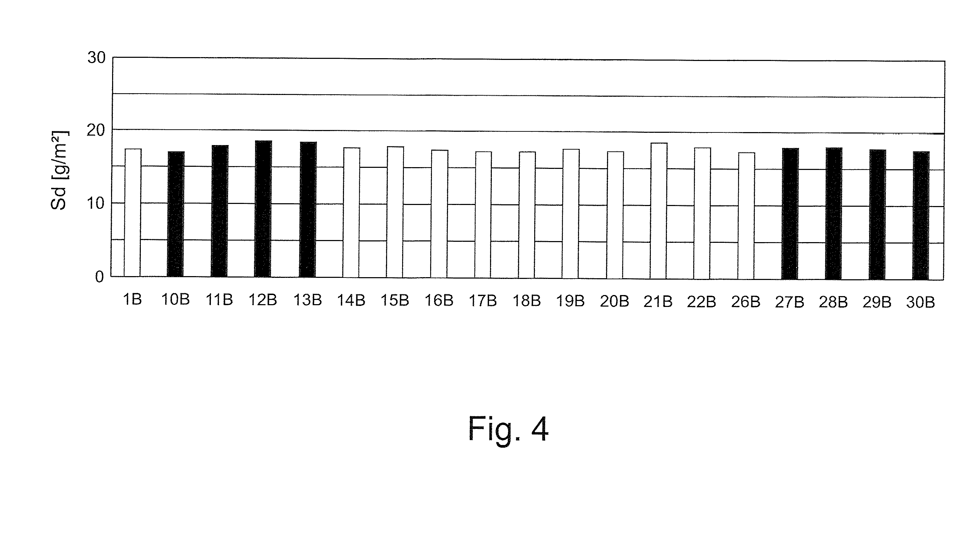

Die so für die Proben ermittelten Belegungsgewichte Sd sind in Figur 4 dargestellt. Darin sind die gemäß DIN EN ISO 3892 ermittelten Belegungsgewichte Sd der Proben mit den Probennummern 1B, 14B, 15B, 16B, 17B, 18B, 19B, 20B, 21B, 22B und 26B als weiße Balken und die für die Proben mit den Probennummern 10B, 11B, 12B, 13B, 27B, 28B, 29B und 30B in erfindungsgemäßer Weise ermittelten Belegungsgewichte Sd als schwarze Balken angegeben.

Zunächst ist festzustellen, dass das erfindungsgemäße Verfahren wie auch das Verfahren nach DIN EN ISO 3892 zu hoch reproduzierbaren Messwerten führt. Es zeigt sich, dass die durch das erfindungsgemäße Verfahren bestimmten Belegungsgewichte nur geringfügig von den nach DIN EN ISO 3892 gemessenen Belegungsgewichten abweichen.

Die Abweichung zur DIN EN ISO 3892 beträgt bei den untersuchten Proben im Mittel +1 g/m² und ist reproduzierbar. Nach Abzug dieses Korrekturfaktors stimmen die durch Anwendung der erfindungsgemäßen Ultraschall-Entphosphatierung ermittelten Belegungsgewichte Sd mit dem Mittel der gemäß DIN EN ISO 3892 ermittelten Belegungsgewichte Sd in einem für die Praxis ausreichenden Maße überein.

## Patentansprüche

1. Verfahren zur Bestimmung eines Maßes, das für die Dicke einer auf einem metallischen Grundwerkstoff aufgebrachten anorganischen Beschichtung kennzeichnend ist, wobei gemäß dem Verfahren eine erste Messung an einer aus dem mit der Beschichtung versehenen Grundwerkstoff bestehenden Probe (P) vorgenommen wird, anschließend die Beschichtung chemisch von der Probe (P) entfernt wird, daraufhin ein zweite Messung an der Probe (P) vorgenommen wird und schließlich aus der Differenz des Ergebnisses der vor und nach der Entfernung der Beschichtung vorgenommenen Messungen das die Dicke der Beschichtung kennzeichnende Maß ermittelt wird, **dadurch gekennzeichnet, dass** die Beschichtung in einem Säurebad (L) aufgelöst wird, welches den Grundwerkstoff nicht angreift, und **dass** das chemische Auflösen der Beschichtung im Säurebad (L) durch eine Ultraschallbehandlung beschleunigt wird.

2. Verfahren nach Anspruch 1, **dadurch gekennzeichnet, dass** das kennzeichnende Maß das Belegungsgewicht der Beschichtung ist.

3. Verfahren nach Anspruch 2, **dadurch gekennzeichnet, dass** bei den vor und nach der Entfernung der Beschichtung durchgeführten Messungen das jeweilige Gewicht der Probe (P) erfasst wird.

4. Verfahren nach einem der voranstehenden Ansprüche, **dadurch gekennzeichnet, dass** die Beschichtung eine Phosphatierung ist.

5. Verfahren nach Anspruch 4, **dadurch gekennzeichnet, dass** die Beschichtung eine Zinkphosphat- oder eine Eisenphosphatbeschichtung ist.

6. Verfahren nach einem der voranstehenden Ansprüche, **dadurch gekennzeichnet, dass** die Ultraschallfrequenz, mit der die Ultraschallbehandlung durchgeführt wird, 20 - 50 kHz beträgt.

7. Verfahren nach einem der voranstehenden Ansprüche, **dadurch gekennzeichnet, dass** das Säurebad (L) eine starke Säure mit einem bei Raumtemperatur gemessenen pKₛ-Wert < 4 enthält.

8. Verfahren nach Anspruch 7, **dadurch gekennzeichnet, dass** das Säurebad (L) Salzsäure enthält.

9. Verfahren nach Anspruch 6, **dadurch gekennzeichnet, dass** das Säurebad (L) Salzsäure in einer Konzentration von 0,05 bis 5 Gew.-% enthält.

10. Verfahren nach einem der voranstehenden Ansprüche, **dadurch gekennzeichnet, dass** das Säurebad (L) einen pH-Wert von 0 bis 2 aufweist.

11. Verfahren nach einem der voranstehenden Ansprüche, **dadurch gekennzeichnet, dass** das Säurebad (L) erwärmt wird.

12. Verfahren nach einem der voranstehenden Ansprüche, **dadurch gekennzeichnet, dass** das chemische Auflösen der Beschichtung im Säurebad (L) zu einem Zeitpunkt beendet wird, bei dem in zuvor durchgeführten Versuchsreihen die Beschichtung vollständig aufgelöst war und kein weiterer Materialabtrag pro Zeiteinheit bei einer längeren Verweildauer im Säurebad (L) festgestellt worden ist.

13. Verfahren nach einem der voranstehenden Ansprüche, **dadurch gekennzeichnet, dass** die Probe (P) nach dem Entfernen der Beschichtung und vor der zweiten Messung mit einem neutralem Spülmittel gewaschen und getrocknet wird.

14. Verfahren nach einem der voranstehenden Ansprüche, **dadurch gekennzeichnet, dass** der Grundwerkstoff ein Eisen-, Cadmium-, Magnesium-, Zink- oder Aluminium-Werkstoff ist.

15. Verfahren nach Anspruch 14, **dadurch gekennzeichnet, dass** der Grundwerkstoff ein Stahl ist.

16. Verfahren nach Anspruch 15, **dadurch gekennzeichnet, dass** der Grundwerkstoff ein Walzdrahterzeugnis ist.

17. Verfahren nach einem der voranstehenden Ansprüche, **dadurch gekennzeichnet, dass** bei der Ermittlung des die Dicke der Beschichtung kennzeichnenden Maßes von der Differenz des Ergebnisses der vor und nach der Entfernung der Beschichtung vorgenommenen Messungen ein Korrekturfaktor abgezogen wird.

18. Verfahren nach Anspruch 17, **dadurch gekennzeichnet, dass** der Korrekturfaktor bezogen auf die jeweils zu entfernende Beschichtung anhand von Vergleichsversuchsreihen empirisch ermittelt wird, bei denen das gemäß einem der voranstehenden Ansprüche ermittelte, die Dicke der Beschichtung kennzeichnende Maß mit dem die Dicke der Beschichtung kennzeichnenden Maß verglichen wird, das bei der Durchführung eines genormten Standardverfahrens ermittelt wird.
